# FASCICULE DE BREVET EUROPEEN

(11) **EP 2 580 121 B1**
(45) Date de publication et mention de la délivrance du brevet: **09.03.2016**
(21) Numéro de dépôt: 11735460.5
(22) Date de dépôt: 09.06.2011
(51) Int. Cl.: F02K 3/077, F02K 1/34, F02C 9/18, F02C 7/045, F02C 3/13, B64D 33/02

(54) **NACELLE DE TURBOREACTEUR**
TURBOSTRAHLTRIEBWERKSGONDEL
TURBOJET ENGINE NACELLE

(30) Priorité: 14.06.2010 FR 1054670
(43) Date de publication de la demande: 17.04.2013
(73) Titulaire: Aircelle, 76700 Gonfreville L'Orcher (FR)
(72) Inventeur: BOUTEILLER, Xavier, F-76600 Le Havre (FR); BLIN, Laurent Albert, F-76310 Sainte Adresse (FR)
(74) Mandataire: Chevalier, Renaud Philippe
(86) Numéro de dépôt international: PCT/FR2011/051304
(87) Numéro de publication internationale: WO 2011/157926

(56) Documents cités:
- EP-A2- 1 517 022
- WO-A2-2011/144842
- US-A- 3 572 960
- US-A- 4 749 150
- US-A1- 2009 140 104

## Description

La présente invention se rapporte à une nacelle de turboréacteur.

Elle se rapporte plus particulièrement à une nacelle comportant au moins un élément de nacelle présentant une paroi délimitant un canal d'écoulement principal, ledit canal présentant une section variable de passage de l'écoulement avec au moins une première zone du canal dont la section de passage est supérieure à celle d'au moins une deuxième zone du canal.

Un avion est mu par plusieurs turboréacteurs logés chacun dans une nacelle abritant également un ensemble de dispositifs d'actionnement annexes liés à son fonctionnement et assurant diverses fonctions lorsque le turboréacteur est en fonctionnement ou à l'arrêt. Ces dispositifs d'actionnement annexes comprennent notamment un système mécanique d'actionnement d'inverseurs de poussée.

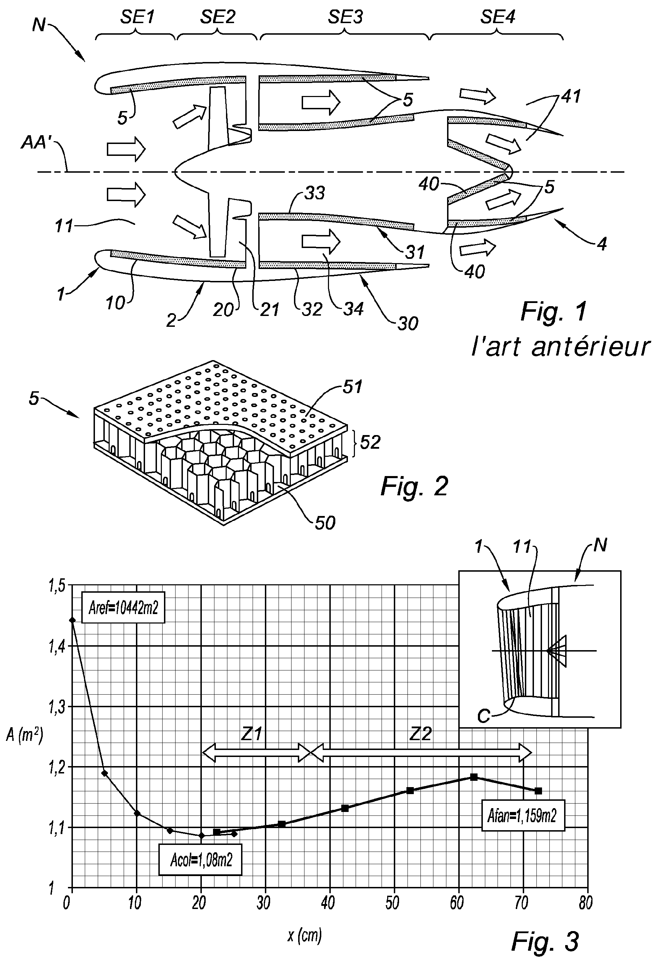

En référence à la figure 1, une nacelle N présente généralement une structure tubulaire comprenant une section d'entrée d'air SE1 en amont du turboréacteur (non illustré), une section médiane SE2 destinée à entourer une soufflante S du turboréacteur, une section aval SE3 abritant généralement des moyens d'inversion de poussée et destinée à entourer la chambre de combustion du turboréacteur, et est généralement terminée par une section de sortie SE4 dont la sortie est située en aval du turboréacteur.

La section d'entrée d'air SE1 se présente sous la forme d'un élément de structure d'entrée 1 de la nacelle N, situé en amont du turboréacteur et de la soufflante S du turboréacteur, et cet élément de structure d'entrée 1 présente une paroi tubulaire interne 10 délimitant un canal d'entrée 11 de l'air dans la nacelle N.

La section médiane SE2 se présente sous la forme d'un élément de structure médian 2, situé en amont du turboréacteur et entourant la soufflante S, et cet élément de structure médian 2 présente une paroi tubulaire interne 20 délimitant, avec la soufflante S, un canal annulaire 21 de circulation de l'air.

La section aval SE3 comporte deux éléments de structure aval 30, 31 concentriques, situés en aval de la soufflante S et entourant le turboréacteur, à savoir :
- un élément de structure externe aval 30, dit Outer Fixed Structure (OFS) ; et
- un élément de structure interne aval 31, dit Inner Fixed Structure (IFS).

Cet élément de structure externe aval 30 présente une paroi tubulaire interne 32 et cet élément de structure interne aval 31 présente une paroi annulaire externe 33, où ces parois tubulaires 32 et 33 délimitent entre elles un canal d'écoulement annulaire 34, également appelé veine, destiné à canaliser le flux d'air froid circulant à l'extérieur du turboréacteur.

En fonctionnement, le turboréacteur du type double flux génère par l'intermédiaire des pâles de la soufflante S en rotation un flux d'air chaud (également appelé flux primaire) issu de la chambre de combustion du turboréacteur, et un flux d'air froid (flux secondaire) qui circule à l'extérieur du turboréacteur dans le canal d'écoulement annulaire 34.

La section de sortie SE4 comporte au moins un élément de tuyère 4 d'éjection des gaz, situé en aval du turboréacteur, où cet élément de tuyère 4 comporte au moins une paroi annulaire 40 délimitant un canal de sortie 41 de l'air hors de la nacelle N. De la sorte, les flux primaire et secondaire sont éjectés du moteur par l'arrière de la nacelle N, via le ou ces canaux de sortie 41.

Dans une nacelle dite à flux séparés, les flux primaire et secondaire ne sont pas mélangés, c'est-à-dire qu'ils sont séparés en sortie et circulent respectivement dans des éléments de tuyère primaire et secondaire. Dans une nacelle dite à flux mélangés, les flux primaire et secondaire sont mélangés en aval du moteur au sein d'un élément de tuyère commune.

Pour limiter la pollution sonore des avions et comme illustré sur la figure 1, il est classique de recouvrir, au moins partiellement, les parois des différents éléments de nacelle par des panneaux d'atténuation acoustique 5.

La figure 2 illustre un exemple de panneau d'atténuation acoustique 5, du type panneau composite sandwich, comportant :
- une peau structurante 50, du type peau imperméable à l'air dite « pleine », fixée contre la paroi de l'élément de nacelle concerné ;
- une peau perforée 51, du type peau perméable à l'air dite « acoustique », délimitant au moins partiellement le canal d'écoulement dans cet élément de nacelle ;
- une âme 52 intercalée entre la peau structurante 50 et la peau perforée 51, ladite âme 52 étant réalisée dans un matériau d'absorption acoustique du type présentant de nombreuses cavités internes.

De tels panneaux constituent des résonnateurs acoustiques aptes à « piéger » le bruit et donc à atténuer les émissions sonores en direction de l'extérieur de la nacelle.

Dans le mode de réalisation illustré sur la figure 2, l'âme 52 est réalisée dans un matériau à structure alvéolaire, du type à nid d'abeille. Ce matériau comporte une pluralité de cellules alvéolaires délimitées par des parois latérales, chaque cellule alvéolaire communicant avec ces voisines. De tels panneaux à structure alvéolaire sont déjà connus, notamment des demandes internationales WO 2008/113904 et WO 2009/066036, et ne seront pas décrits plus en détail.

Dans un mode de réalisation non illustré, décrit notamment dans les demandes de brevet français FR 2 938 014 et FR 2 934 641, l'âme est réalisée dans un matériau poreux, étant entendu par « matériau poreux » un matériau ouvert (c'est-à-dire présentant de nombreuses cavités communicantes) se présentant sous forme de mousse, ou sous forme expansée, ou sous forme de feutre, ou sous forme d'un agrégat d'éléments de petite taille tels que des billes.

Suivant l'architecture de la nacelle, certains des canaux mentionnés ci-dessus présentent une section variable de passage de l'écoulement avec au moins une première zone du canal dont la section de passage est supérieure à celle d'au moins une deuxième zone du canal. Etant donné que la répartition de la pression dans un canal dépend de la section de passage de l'écoulement, ces canaux présentent des zones de forte pression (associées à de grandes sections de passage) et des zones de faible pression (associées à de faibles sections de passage).

La figure 3 illustre l'évolution de la section A (en m²) de passage de l'écoulement dans le canal d'entrée 11 en fonction de la position longitudinale X (en cm) le long de l'axe médian AA' de la nacelle N. On distingue au moins deux zones Z1, Z2 distinctes, à savoir :
- une première zone Z1 de faible section, proche du col C entrée d'air, correspondant à une zone de faible pression et de haute vitesse en fonctionnement sur l'avion ; et
- une deuxième zone Z2 de grande section, proche de la soufflante, correspondant à une zone de forte pression et de faible vitesse en fonctionnement sur l'avion.

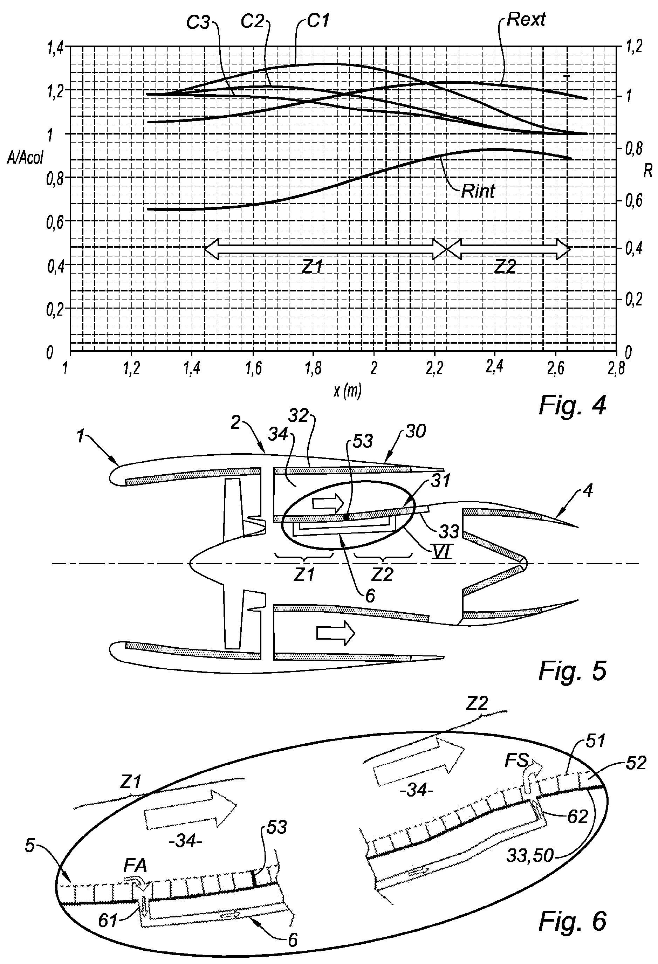

La figure 4 illustre sur les courbes C1 à C3 plusieurs exemples d'évolution de la section A, rapportée sur la section Acol prise au niveau du col C, de passage de l'écoulement dans un canal annulaire en fonction de la position longitudinale X (en m) le long de l'axe médian AA' de la nacelle N. Les courbes Rint et Rext illustrent l'évolution des rayons internes et externes du canal annulaire en question en fonction de la position longitudinale X. On distingue au moins deux zones Z1, Z2 distinctes, à savoir :
- une première zone Z1 de faible section, correspondant à une zone de faible pression et de haute vitesse en fonctionnement sur l'avion ; et
- une deuxième zone Z2 de grande section correspondant à une zone de forte pression et de faible vitesse en fonctionnement sur l'avion.

Ce canal annulaire peut être situé dans la section aval SE3 ou la section de sortie SE4 d'une nacelle N. Par exemple, ce canal annulaire peut correspondre au canal annulaire 34, ou veine, situé entre l'élément de structure externe aval 30 (Outer Fixed Structure) et l'élément de structure interne aval 31 (Inner Fixed Structure). Ce canal annulaire peut également être situé dans un élément de tuyère, comme par exemple dans un élément de tuyère primaire ou secondaire pour une nacelle à flux séparés, ou dans un élément de tuyère commune pour une nacelle à flux mélangés.

Cependant, sur les parois délimitant les différents canaux de la nacelle, les couches limites turbulentes de l'écoulement créent des pertes de charges par frottement. L'impact de ces pertes de charge sur la performance du turboréacteur et donc sur la consommation de carburant est significatif. La Demanderesse a ainsi constaté une perte d'environ 1,5 % de la consommation de carburant du fait de ces frottements dans l'élément de tuyère secondaire d'une nacelle à flux séparés.

L'état de la technique peut également être illustré par les enseignements des demandes de brevet US 2009/140104 A1, EP 1 517 022 A2 et US 3 572 960 A.

La demande de brevet US 2009/140104 A1, qui est considéré comme l'art antérieur le plus proche et décrit les caractéristiques du préambule de la revendication 1, divulgue une nacelle comportant des moyens de soufflage destinés à injecter un flux d'air tangentiel dans le volume interne de la nacelle, où ces moyens de soufflage comportent au moins un conduit d'arrivée d'air apte à prélever le flux d'air tangentiel au niveau des compresseurs du turboréacteur, afin de guider l'écoulement du flux d'air dans la nacelle, de manière à être maintenu parallèlement à l'axe longitudinal de la nacelle et à supprimer les éventuels décollements de filets d'air dans la nacelle.

La demande de brevet EP 1 517 022 A2 divulgue une méthode d'atténuation du bruit de turboréacteur consistant à augmenter la vitesse du flux localement, réduire la couche limite et les turbulences associées et optimiser la réfraction et l'absorption du son avec un recouvrement acoustique, où l'augmentation de cette vitesse peut être prévue au moyen d'une conduite by-pass qui aspire et souffle de l'air dans la nacelle par différentiel de pression.

La demande de brevet US 3 572 960 A divulgue la mise en place d'un ou plusieurs conduits à l'intérieur d'un capot de soufflante, entre des ailettes redresseuses de sortie et des ailettes directrices d'entrée disposées dans le canal d'écoulement principal, pour éliminer au moins substantiellement les sillages aux bords de fuite des ailettes directrices d'entrée, et donc réduire le bruit.

La présente invention a pour but de résoudre au moins en partie les inconvénients précités en proposant une nacelle dans laquelle les pertes de charges par frottement, sur les parois délimitant les canaux de la nacelle, sont réduites.

A cet effet, elle propose une nacelle de turboréacteur comportant au moins un élément de nacelle présentant une paroi délimitant un canal d'écoulement principal, ledit canal présentant une section variable de passage de l'écoulement avec au moins une première zone du canal dont la section de passage est supérieure à celle d'au moins une deuxième zone du canal, ladite nacelle comportant en outre au moins un conduit d'écoulement secondaire établissant une liaison fluidique entre la première zone et la deuxième zone du canal en parallèle dudit canal, remarquable en ce que la paroi de l'élément de nacelle est recouverte, au moins partiellement, par un panneau d'atténuation acoustique s'étendant dans la première et la deuxième zones du canal, ledit panneau comportant :
- une peau structurante fixée contre ladite paroi de l'élément de nacelle ;
- une peau perforée délimitant au moins partiellement le canal ;
- une âme intercalée entre la peau structurante et la peau perforée, ladite âme étant réalisée dans un matériau d'absorption acoustique du type présentant de nombreuses cavités internes ;
et où le ou chaque conduit présente, d'une part, une première extrémité traversant la peau structurante dans la première zone du canal et, d'autre part, une deuxième extrémité traversant la peau structurante dans la deuxième zone du canal, afin d'établir l'écoulement secondaire dans le conduit via l'âme et la peau perforée du panneau d'atténuation acoustique.

Lors du fonctionnement sur l'avion, le différentiel de pression entre la première zone (forte pression) et la deuxième zone (faible pression) permet de créer un écoulement secondaire entre ces deux zones. Ainsi, avec ce ou ces conduits, on obtient un écoulement secondaire de la première zone vers la deuxième zone avec :
- une aspiration dans la première zone, autrement dit dans la ou les zones à forte pression ; et
- un soufflage dans la deuxième zone, autrement dit dans la ou les zones à faible pression.

Plus précisément, on obtient un écoulement secondaire de la première zone vers la deuxième zone avec :
- une aspiration dans la première zone, à travers les trous ménagés dans la peau perforée et à travers l'âme ; et
- un soufflage dans la deuxième zone, également à travers les trous ménagés dans la peau perforée et à travers l'âme.

Le soufflage dans la deuxième zone permet avantageusement de diminuer le coefficient de frottement de la couche limite dans cette deuxième zone, réduisant ainsi les pertes de charges par frottement.

Avec ce ou ces conduits, l'air prélevé dans le canal de la nacelle est réinjecté dans le même canal de la nacelle, de sorte que cet écoulement secondaire ne constitue pas une fuite. Ce ou ces conduits forment ainsi un système passif d'aspiration et de soufflage, sans source externe d'écoulement.

En outre, le débit d'air circulant dans le ou les conduits (autrement dit dans l'écoulement secondaire) peut également améliorer le refroidissement de la structure de la nacelle dans le cas où l'air prélevé dans la ou les premières zones est froid.

Dans une réalisation avantageuse, le ou les conduits définissent, d'une part, dans la première zone du canal une surface d'entrée de l'écoulement secondaire et, d'autre part, dans la deuxième zone du canal une surface de sortie de l'écoulement secondaire, où la surface d'entrée est de superficie supérieure à celle de la surface de sortie.

En effet, l'aspiration dans la première zone va par contre augmenter le coefficient de frottement de la couche limite dans cette première zone, augmentant ainsi les pertes de charges par frottement. Ainsi, l'invention permet de diminuer les pertes de charge par frottement dans la ou les deuxièmes zones et augmenter les pertes de charge par frottement dans la ou les premières zones.

Pour diminuer les pertes de charge par frottement de façon globale, autrement dit sur l'ensemble des zones du canal, et ainsi améliorer la performance du turboréacteur et diminuer la consommation de carburant, il est avantageux d'avoir les conditions suivantes :
- la vitesse d'aspiration dans la ou les premières zones doit être la plus faible possible de façon à limiter l'augmentation du coefficient de frottement dans ces premières zones d'aspiration ; et
- la vitesse de soufflage dans la ou les deuxièmes zones doit être la plus forte possible de façon à diminuer le plus possible le coefficient de frottement dans ces deuxièmes zones de soufflage, qui sont également des zones à fortes vitesse d'écoulement dans le canal et donc à forte traînée.

Pour ce faire, il est avantageux d'avoir une surface d'aspiration plus importante que la surface de soufflage, autrement dit que la surface d'entrée de l'écoulement secondaire soit de superficie supérieure à la superficie de la surface de sortie de l'écoulement secondaire.

Avantageusement, le ratio entre la superficie de la surface d'entrée et la superficie de la surface de sortie est supérieur à 2, et de préférence de l'ordre de 4. Un ratio de 4, autrement dit un ratio d'environ 80% / 20% entre ces superficies, est particulièrement approprié pour les nacelles.

Selon une caractéristique, l'âme du panneau d'atténuation acoustique présente au moins une paroi interne disposée entre la première extrémité et la deuxième extrémité du ou des conduits afin d'établir l'étanchéité de l'âme entre la première zone et la deuxième zone du canal, assurant ainsi de manière avantageuse un écoulement secondaire dans le ou les conduits, et non sur la longueur de l'âme.

Selon une autre caractéristique, le matériau d'absorption acoustique de l'âme du panneau d'atténuation acoustique est du type matériau à structure alvéolaire, notamment à nid d'abeille, ou matériau poreux.

Le ou chaque élément de nacelle peut être choisi parmi les éléments suivants :
- élément de structure d'entrée de la nacelle, situé en amont du turboréacteur et d'une soufflante du turboréacteur, ledit élément de structure d'entrée présentant une paroi tubulaire interne délimitant un canal d'entrée de l'air dans la nacelle ;
- élément de structure médian, situé en amont du turboréacteur et entourant la soufflante, ledit élément de structure médian présentant une paroi tubulaire interne délimitant, avec la soufflante, un canal annulaire de circulation de l'air ;
- élément de structure externe aval, situé en aval de la soufflante et entourant le turboréacteur, ledit élément de structure externe aval présentant une paroi tubulaire interne délimitant, avec un élément de structure interne aval, un canal d'écoulement annulaire destiné à canaliser le flux d'air froid circulant à l'extérieur du turboréacteur ;
- élément de structure interne aval, situé en aval de la soufflante et entourant le turboréacteur, ledit élément de structure interne aval présentant une paroi annulaire externe délimitant, avec l'élément de structure externe aval, un canal d'écoulement annulaire destiné à canaliser le flux d'air froid circulant à l'extérieur du turboréacteur ;
- élément de tuyère d'éjection situé en aval du turboréacteur ; ledit élément de tuyère comportant au moins une paroi annulaire délimitant un canal de sortie de l'air hors de la nacelle.

Il est ainsi possible de disposer de tels conduits dans plusieurs éléments de structure de la nacelle, tout comme il est possible de prévoir un ou une pluralité de conduits pour un même canal.

D'autres caractéristiques et avantages de la présente invention apparaîtront à la lecture de la description détaillée ci-après, d'un exemple de mise en oeuvre non limitatif, faite en référence aux figures annexées dans lesquelles :
- la figure 1, déjà commentée, est une vue schématique en coupe longitudinale d'une nacelle de type connu ;
- la figure 2, déjà commentée, est une vue schématique en perspective d'un panneau d'atténuation acoustique connu à structure alvéolaire pour nacelle, avec arrachement partiel de l'une de ses peaux ;
- la figure 3, déjà commentée, est un graphe illustrant l'évolution de la section A de passage de l'écoulement dans un canal d'entrée de nacelle en fonction de la position longitudinale X, avec une illustration schématique en haut et à droite de ce canal d'entrée de nacelle ;
- la figure 4, déjà commentée, est un graphe illustrant plusieurs courbes d'évolution de la section A, rapportée sur une section Acol prise au niveau du col C d'un canal annulaire (ou veine) d'une nacelle, de passage de l'écoulement dans ce canal annulaire de la nacelle en fonction de la position longitudinale X, ainsi que l'évolution des rayons internes et externes de ce canal annulaire en fonction de la position longitudinale X ;
- la figure 5 est une vue schématique en coupe longitudinale d'une nacelle conforme à l'invention ;
- la figure 6 est une vue agrandie de la zone VI de la figure 5 ;
- la figure 7 est une vue schématique en perspective d'un panneau d'atténuation acoustique connu à structure alvéolaire pour une nacelle conforme à l'invention, illustrant l'aspiration et le soufflage dans les première et deuxième zones d'un canal ;
- la figure 8 est un graphe illustrant plusieurs courbes en fonction de la vitesse d'aspiration par un conduit dans une deuxième zone d'un canal d'une nacelle conforme à l'invention, ces courbes illustrant l'évolution du coefficient de frottement Cf dans cette deuxième zone en fonction de la position longitudinale X ;
- la figure 9 est un graphe illustrant plusieurs courbes en fonction de la vitesse de soufflage par un conduit dans une première zone d'un canal d'une nacelle conforme à l'invention, ces courbes illustrant l'évolution du coefficient de frottement Cf dans cette première zone en fonction de la position longitudinale X ;
- la figure 10 est un graphe illustrant l'évolution du rayon des différentes parois interne / externe des canaux primaire / secondaire en fonction de la position longitudinale X ;
- la figure 11 est un graphe illustrant l'évolution du mach en fonction de la position longitudinale X pour une paroi intérieure et une paroi extérieure d'un canal annulaire équipé d'un conduit conforme à l'invention.

Une nacelle conforme à l'invention est décrite en référence aux figures 5 à 7. Cette nacelle comporte au moins un élément de nacelle présentant une paroi délimitant un canal d'écoulement principal, où ce canal présente une section variable de passage de l'écoulement avec au moins une première zone Z1 du canal dont la section de passage est supérieure à celle d'au moins une deuxième zone Z2 du canal.

Ces éléments de nacelle ont déjà été décrits ci-dessus, à savoir l'élément de structure d'entrée 1, l'élément de structure médian 2, l'élément de structure externe aval 30, élément de structure interne aval 31 et le ou les éléments de tuyère 4, comme par exemple les éléments de tuyère primaire et secondaire pour une nacelle à flux séparés et l'élément de tuyère commune pour une nacelle à flux mélangés.

Pour la suite de la description, et comme illustré sur la figure 5, on choisit l'élément de structure interne aval 31, dit Inner Fixed Structure (IFS) qui présente une paroi une paroi tubulaire externe 33 délimitant, avec la paroi annulaire interne 32 de l'élément de structure externe aval 30, le canal d'écoulement annulaire 34. Bien entendu, les autres éléments 1, 2, 30 et 4 auraient pu être choisis pour décrire et illustrer l'invention.

Ce canal annulaire 34 présente deux zones Z1, Z2 de sections distinctes, à savoir :
- une première zone Z1 de faible section, correspondant à une zone de faible pression et de haute vitesse en fonctionnement sur l'avion ; et
- une deuxième zone Z2 de grande section correspondant à une zone de forte pression et de faible vitesse en fonctionnement sur l'avion.

Conformément à l'invention, cette nacelle comporte en outre au moins un conduit 6 d'écoulement secondaire établissant une liaison fluidique entre la première zone Z1 et la deuxième zone Z2 du canal 34 en parallèle de ce canal 34. Selon l'invention, la nacelle peut comporter une pluralité de conduits 6 d'écoulement secondaire établissant une liaison fluidique entre la première zone Z1 et la deuxième zone Z2 du canal 34 en parallèle de ce canal 34.

Un panneau d'atténuation acoustique 5 est monté sur la paroi tubulaire externe 33 ; ce panneau d'atténuation acoustique 5 étant du type déjà décrit ci-dessus avec une peau structurante 50, une peau perforée 51 et une âme 52 réalisée dans un matériau d'absorption acoustique présentant de nombreuses cavités internes.

Comme visible sur la figure 6, le ou chaque conduit 6 présente deux extrémités opposées, à savoir :
- une première extrémité 61 traversant la peau structurante 50 dans la première zone Z1 du canal 34 ; et
- une deuxième extrémité 62 traversant la peau structurante 50 dans la deuxième zone Z2 du canal 34.

En outre, l'âme 52 du panneau d'atténuation acoustique 5 présente au moins une paroi interne 53 (schématisée sur la figure 5) disposée entre la première extrémité et la deuxième extrémité du ou des conduits afin d'établir l'étanchéité de l'âme entre la première zone et la deuxième zone du canal

Comme schématisé par les flèches sur la figure 6, l'écoulement secondaire s'établit dans le conduit 6, de la première extrémité 61 vers la deuxième extrémité 62, via l'âme 52 et les trous de la peau perforée 51 du panneau d'atténuation acoustique 5, avec :
- une aspiration dans la première zone Z1, à travers les trous ménagés dans la peau perforée 51, l'âme 52 et la première extrémité 61 du conduit 6 ; et
- un soufflage dans la deuxième zone Z2, à travers la deuxième extrémité 62 du conduit 6, les trous ménagés dans la peau perforée 51 et l'âme 52.

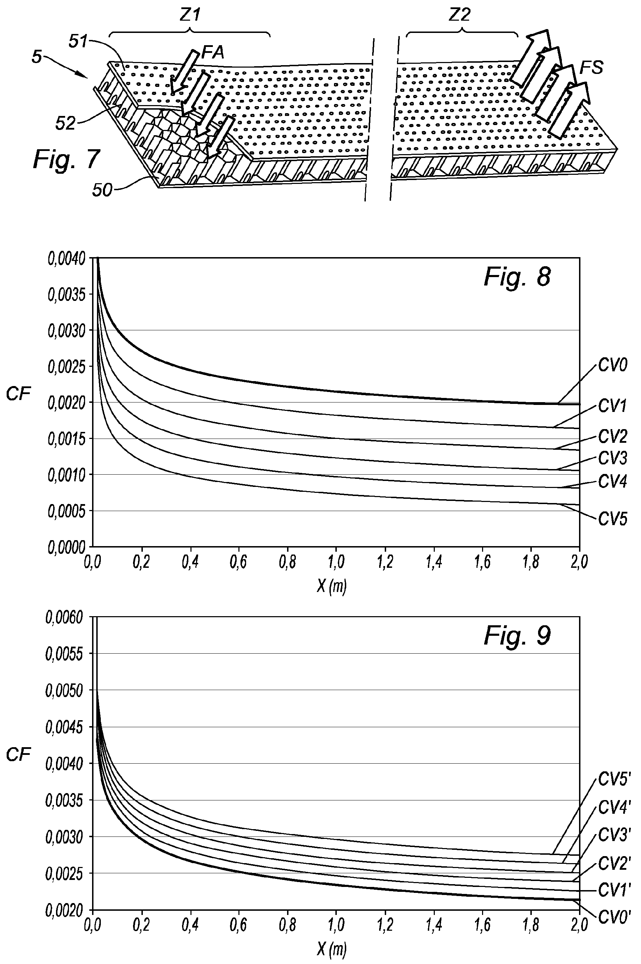

La figure 8 est un graphe illustrant plusieurs courbes CV0 à CV5 illustrant l'évolution du coefficient de frottement CF en fonction de la position longitudinale X, le coefficient de frottement CF étant considéré au niveau d'une paroi délimitant un canal d'écoulement principal, dans une deuxième zone (ou zone de soufflage) de ce canal. Les courbes CV0 à CV5 sont fonctions de la vitesse de soufflage VS par un conduit dans cette deuxième zone du canal, avec :
- CV0 : courbe d'évolution de CF pour VS = 0 m/s ;
- CV1 : courbe d'évolution de CF pour VS = 0,1 m/s ;
- CV2 : courbe d'évolution de CF pour VS = 0,2 m/s ;
- CV3 : courbe d'évolution de CF pour VS = 0,3 m/s ;
- CV4 : courbe d'évolution de CF pour VS = 0,4 m/s ; et
- CV5 : courbe d'évolution de CF pour VS = 0,5 m/s.

On note, sur cette figure 8, la diminution du coefficient de frottement CF avec la vitesse de soufflage VS. Autrement dit, plus la vitesse de soufflage VS est grande et plus le coefficient de frottement CF est faible. Ainsi, le coefficient de frottement CF est réduit d'environ 50% pour une vitesse de soufflage de 0.3 m/s (courbe CV3) par rapport à une vitesse de soufflage nulle (courbe CV0).

La figure 9 est un graphe illustrant plusieurs courbes CV0' à CV5' illustrant l'évolution du coefficient de frottement CF en fonction de la position longitudinale X, le coefficient de frottement CF étant considéré au niveau d'une paroi délimitant un canal d'écoulement principal, dans une première zone (ou zone d'aspiration) de ce canal. Les courbes CV0' à CV5' sont fonctions de la vitesse d'aspiration VA par un conduit dans cette première zone du canal, avec :
- CV0': courbe d'évolution de CF pour VA = 0 m/s ;
- CV1' : courbe d'évolution de CF pour VA = 0,02 m/s ;
- CV2' : courbe d'évolution de CF pour VA = 0,04 m/s ;
- CV3' : courbe d'évolution de CF pour VA = 0,06 m/s ;
- CV4' : courbe d'évolution de CF pour VA = 0,08 m/s ; et
- CV5' : courbe d'évolution de CF pour VA = 0,10 m/s.

On note, sur cette figure 9, l'augmentation du coefficient de frottement CF avec la vitesse d'aspiration VA. Autrement dit, plus la vitesse d'aspiration VA est grande et plus le coefficient de frottement CF est grand. Ainsi, le coefficient de frottement CF est augmenté d'environ 15% pour une vitesse d'aspiration de 0.06 m/s (courbe CV3') par rapport à une vitesse d'aspiration nulle (courbe CV0').

Pour diminuer les pertes de charge par frottement de façon globale, autrement dit sur l'ensemble des zones Z1, Z2 du canal 34, et ainsi améliorer la performance du turboréacteur et diminuer la consommation de carburant, la surface d'aspiration est plus importante que la surface de soufflage, de sorte que la vitesse d'aspiration VA dans la première zone Z1 est plus faible que la vitesse de soufflage VS dans la deuxième zone Z2, comme schématisé sur les figures 6 et 7 avec les flèches FA qui symbolisent l'aspiration dans la première zone Z1 et les flèches FS qui symbolisent le soufflage dans la deuxième zone Z2.

Autrement dit, la surface d'entrée de l'écoulement secondaire (ou surface d'aspiration) est de superficie supérieure à la superficie de la surface de sortie de l'écoulement secondaire (surface de soufflage).

Pour avoir un bon compromis entre aspiration et soufflage, le ratio entre la superficie de la surface d'entrée (ou surface d'aspiration) et la superficie de la surface de sortie (surface de soufflage) est d'environ 80% / 20%, soit de l'ordre de 4.

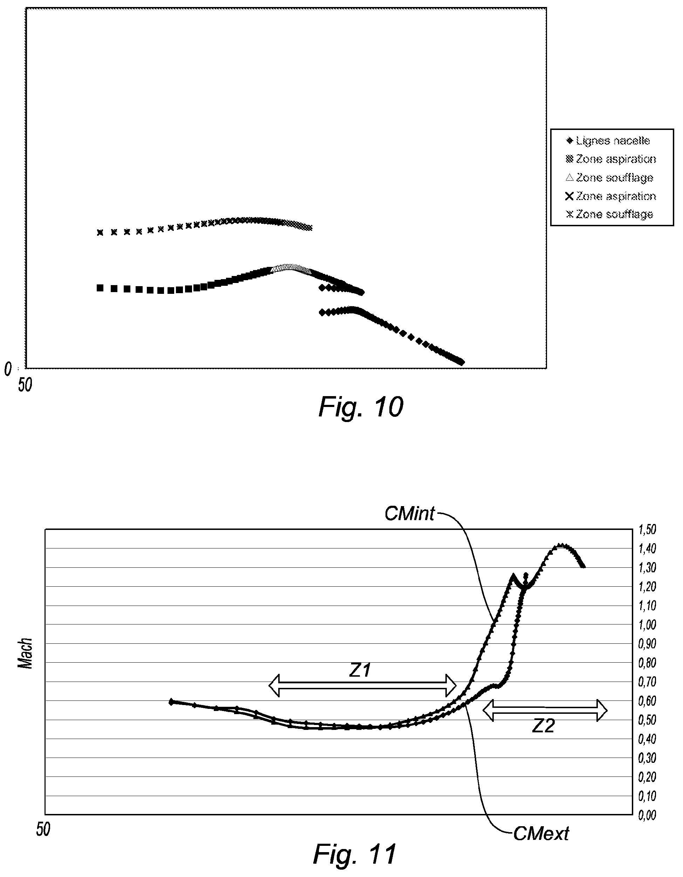

La figure 11 est un graphe illustrant l'évolution du mach (ou nombre de Mach) en fonction de la position longitudinale X pour une paroi intérieure (courbe CMint) et une paroi extérieure (courbe CMext) d'un canal annulaire afin d'illustrer la localisation de la première zone Z1 d'aspiration et de la deuxième zone Z2 de soufflage.

On estime avec l'invention un gain de consommation spécifique d'environ 0,2% ; ce gain de 0,2% étant calculé à partir de la diminution globale du coefficient de frottement qui permet de déterminer le gain en perte de charge dans le canal annulaire. Ensuite, un coefficient d'échange permet de calculer l'équivalent en terme de gain de consommation spécifique.

Bien entendu l'exemple de mise en oeuvre évoqué ci-dessus ne présente aucun caractère limitatif et d'autres détails et améliorations peuvent être apportés à la nacelle selon l'invention, sans pour autant sortir du cadre de l'invention où d'autres localisations du ou des conduits et/ou d'autres formes de paroi d'atténuation acoustique peuvent par exemple être réalisées.

## Revendications

1. Nacelle de turboréacteur comportant au moins un élément de nacelle (31) présentant une paroi (33) délimitant un canal (34) d'écoulement principal, ledit canal (34) présentant une section variable de passage de l'écoulement avec au moins une première zone (Z1) du canal (34) dont la section de passage est supérieure à celle d'au moins une deuxième zone (Z2) du canal (34), ladite nacelle comportant en outre au moins un conduit (6) d'écoulement secondaire établissant une liaison fluidique entre la première zone (Z1) et la deuxième zone (Z2) du canal (34) en parallèle dudit canal (34), **caractérisée en ce que** la paroi (33) de l'élément de nacelle (31) est recouverte, au moins partiellement, par un panneau (5) d'atténuation acoustique s'étendant dans la première (Z1) et la deuxième (Z2) zones du canal (34), ledit panneau (5) comportant :
- une peau structurante (50) fixée contre ladite paroi (33) de l'élément de nacelle (31) ;
- une peau perforée (51) délimitant au moins partiellement le canal (34) ;
- une âme (52) intercalée entre la peau structurante (50) et la peau perforée (51), ladite âme (52) étant réalisée dans un matériau d'absorption acoustique du type présentant de nombreuses cavités internes ;
et dans laquelle le ou chaque conduit (6) présente, d'une part, une première extrémité (61) traversant la peau structurante (50) dans la première zone (Z1) du canal (34) et, d'autre part, une deuxième extrémité (62) traversant la peau structurante dans la deuxième zone (Z2) du canal (34), afin d'établir l'écoulement secondaire dans le conduit (6) via l'âme (52) et la peau perforée (51) du panneau (5) d'atténuation acoustique.

2. Nacelle selon la revendication 1, dans laquelle le ou les conduits (6) définissent, d'une part, dans la première zone (Z1) du canal (34) une surface d'entrée de l'écoulement secondaire et, d'autre part, dans la deuxième zone (Z2) du canal (34) une surface de sortie de l'écoulement secondaire, où la surface d'entrée est de superficie supérieure à celle de la surface de sortie.

3. Nacelle selon la revendication 2, dans laquelle le ratio entre la superficie de la surface d'entrée et la superficie de la surface de sortie est supérieur à 2, de préférence de l'ordre de 4.

4. Nacelle selon l'une quelconque des revendications précédentes, dans laquelle l'âme (52) du panneau (5) d'atténuation acoustique présente au moins une paroi interne (53) disposée entre la première extrémité (61) et la deuxième extrémité (62) du ou des conduits (6) afin d'établir l'étanchéité de l'âme (52) entre la première zone (Z1) et la deuxième zone (Z2) du canal (34).

5. Nacelle selon l'une quelconque des revendications précédentes, dans laquelle le matériau d'absorption acoustique de l'âme (52) du panneau d'atténuation acoustique (5) est du type matériau à structure alvéolaire, notamment à nid d'abeille, ou matériau poreux.

6. Nacelle selon l'une quelconque des revendications 1 à 5, dans laquelle le ou chaque élément de nacelle est un élément de structure d'entrée (1) de la nacelle, situé en amont du turboréacteur et d'une soufflante (S) du turboréacteur, ledit élément de structure d'entrée (1) présentant une paroi (10) tubulaire interne délimitant un canal (11) d'entrée de l'air dans la nacelle.

7. Nacelle selon l'une quelconque des revendications 1 à 5, dans laquelle le ou chaque élément de nacelle est un élément de structure médian (2), situé en amont du turboréacteur et entourant la soufflante (S), ledit élément de structure médian (2) présentant une paroi (20) tubulaire interne délimitant, avec la soufflante (S), un canal (21) annulaire de circulation de l'air.

8. Nacelle selon l'une quelconque des revendications 1 à 5, dans laquelle le ou chaque élément de nacelle est un élément de structure externe aval (30), situé en aval de la soufflante (S) et entourant le turboréacteur, ledit élément de structure externe aval (30) présentant une paroi (32) tubulaire interne délimitant, avec un élément de structure interne aval (31), un canal (34) d'écoulement annulaire destiné à canaliser le flux d'air froid circulant à l'extérieur du turboréacteur.

9. Nacelle selon l'une quelconque des revendications 1 à 5, dans laquelle le ou chaque élément de nacelle est un élément de structure interne aval (31), situé en aval de la soufflante (S) et entourant le turboréacteur, ledit élément de structure interne aval (31) présentant une paroi (33) annulaire externe délimitant, avec l'élément de structure externe aval (30), un canal (34) d'écoulement annulaire destiné à canaliser le flux d'air froid circulant à l'extérieur du turboréacteur.

10. Nacelle selon l'une quelconque des revendications 1 à 5, dans laquelle le ou chaque élément de nacelle est un élément de tuyère (4) d'éjection situé en aval du turboréacteur, ledit élément de tuyère (4) comportant au moins une paroi (40) annulaire délimitant un canal (41) de sortie de l'air hors de la nacelle.

## Patentansprüche

1. Turbotriebwerksgondel, zumindest ein Gondelelement (31) umfassend, das eine Wand (33) aufweist, die einen Hauptströmungskanal (34) eingrenzt, wobei der besagte Kanal (34) einen variablen Strömungsdurchlassquerschnitt mit zumindest einer ersten Zone (Z1) des Kanals (34) aufweist, dessen Strömungsquerschnitt größer ist, als jener von zumindest einer zweiten Zone (Z2) des Kanals (34), wobei die besagte Gondel darüber hinaus zumindest eine Sekundärströmungsleitung (6) umfasst, die eine Fluidverbindung zwischen der ersten Zone (Z1) und der zweiten Zone (Z2) des Kanals (34) parallel zum besagten Kanal (34) erstellt, **dadurch gekennzeichnet, dass** die Wand (33) des Gondelelements (31) zumindest teilweise mit einer Geräuschdämpfungsplatte (5) bedeckt ist, die sich über die erste (Z1) und die zweite (Z2) Zone des Kanals (34) erstreckt, wobei die besagte Platte (5) folgendes umfasst:
- eine strukturierte Hülle (50), die an der besagten Wand (33) des Gondelelements (31) befestigt ist;
- eine perforierte Hülle (51), die den Kanal (34) zumindest teilweise eingrenzt;
- ein zwischen die strukturierte Hülle (50) und die perforierte Hülle (51) eingesetztes Innenblatt (52), wobei das besagte Innenblatt (52) aus einem Geräuschdämpfungsmaterial in der Art gefertigt ist, dass es zahlreiche innere Aushöhlungen aufweist;
und wobei die oder jede Leitung (6) einerseits ein erstes Ende (61) aufweist, das in der ersten Zone (Z1) des Kanals (34) durch die strukturierte Hülle (50) führt, und andererseits ein zweites Ende (62), das in der zweiten Zone (Z2) des Kanals (34) durch die strukturierte Hülle führt, um die Sekundärströmung in der Leitung (6) durch das Innenblatt (52) und die perforierte Hülle (51) der Geräuschdämpfungsplatte (5) zu erstellen.

2. Gondel nach Anspruch 1, wobei die Leitung oder Leitungen (6) einerseits in der ersten Zone (Z1) des Kanals (34) eine Einlassfläche für die Sekundärströmung, und andererseits in der zweiten Zone (Z2) des Kanals (34) eine Auslassfläche für die Sekundärströmung bilden, wobei die Einlassfläche eine größere Flächenausdehnung aufweist, als jene der Auslassfläche.

3. Gondel nach Anspruch 2, wobei das Verhältnis zwischen der Flächenausdehnung der Einlassfläche und der Flächenausdehnung der Auslassfläche größer als 2 ist, und vorzugsweise in der Größenordnung von 4 liegt.

4. Gondel nach irgendeinem der vorherigen Ansprüche, wobei das Innenblatt (52) der Geräuschdämpfungsplatte (5) zumindest eine Innenwand (53) aufweist, die zwischen dem ersten Ende (61) und dem zweiten Ende (62) der Leitung oder Leitungen (6) angeordnet ist, um die Dichtheit des Innenblatts (52) zwischen der ersten Zone (Z1) und der zweiten Zone (Z2) des Kanals (34) herzustellen.

5. Gondel nach irgendeinem der vorherigen Ansprüche, wobei das Geräuschdämpfungsmaterial des Innenblatts (52) der Geräuschdämpfungsplatte (5) ein Material mit einer alveolaren Struktur, vor allem in Wabenform oder ein poröses Material ist.

6. Gondel nach irgendeinem der Ansprüche 1 bis 5, wobei das oder jedes Gondelelement ein Einlassstrukturelement (1) der Gondel ist, das sich stromaufwärts vom Turbotriebwerk und von einem Gebläse (S) des Turbotriebwerks befindet, wobei das besagte Einlassstrukturelement (1) eine rohrförmige Innenwand (10) aufweist, die einen Lufteinlasskanal (11) in die Gondel eingrenzt.

7. Gondel nach irgendeinem der Ansprüche 1 bis 5, wobei das oder jedes Gondelelement ein Mittelstrukturelement (2) der Gondel ist, das sich stromaufwärts vom Turbotriebwerk befindet und das Gebläse (S) umgibt, wobei das besagte Mittelstrukturelement (2) eine rohrförmige Innenwand (20) aufweist, die gemeinsam mit dem Gebläse (S) einen ringförmigen Luftzirkulationskanal (21) eingrenzt.

8. Gondel nach irgendeinem der Ansprüche 1 bis 5, wobei das oder jedes Gondelelement ein stromabwärts befindliches externes Strukturelement (30) ist, das sich stromabwärts vom Gebläse (S) befindet und das Turbotriebwerk umgibt, wobei das besagte stromabwärts befindliche externe Strukturelement (30) eine rohrförmige Innenwand (32) aufweist, die gemeinsam mit einem stromabwärts befindlichen internen Strukturelement (31) einen ringförmigen Strömungskanal (34) eingrenzt, der dazu bestimmt ist, die Kaltluftströmung, die außerhalb des Turbotriebwerks zirkuliert, zu kanalisieren.

9. Gondel nach irgendeinem der Ansprüche 1 bis 5, wobei das oder jedes Gondelelement ein stromabwärts befindliches internes Strukturelement (31) ist, das sich stromabwärts vom Gebläse (S) befindet und das Turbotriebwerk umgibt, wobei das besagte stromabwärts befindliche interne Strukturelement (31) eine ringförmige Außenwand (33) aufweist, die gemeinsam mit dem stromabwärts befindlichen externen Strukturelement (30) einen ringförmigen Strömungskanal (34) eingrenzt, der dazu bestimmt ist, die Kaltluftströmung, die außerhalb des Turbotriebwerks zirkuliert, zu kanalisieren.

10. Gondel nach irgendeinem der Ansprüche 1 bis 5, wobei das oder jedes Gondelelement ein Schubdüsenelement (4) ist, das sich stromabwärts vom Turbotriebwerk befindet, wobei das besagte Düsenelement (4) zumindest eine ringförmige Wand (40) umfasst, die einen Luftauslasskanal (41) aus der Gondel heraus eingrenzt.

## Claims

1. A turbojet engine nacelle including at least one nacelle element (31) having a wall (33) delimiting a main flow channel (34), said channel (34) having a variable section for the passage of the flow with at least one first area (ZI) of the channel (34) of which the passage section is larger than that of at least a second area (Z2) of the channel (34), said nacelle further including at least one secondary flow duct (6) establishing a fluid connection between the first area (Z1) and the second area (Z2) of the channel (34) parallel to said channel (34), **characterized in that** the wall (33) of the nacelle element (31) is covered, at least partially, by an acoustic attenuation panel (5) extending in the first (Z1) and the second (Z2) areas of the channel (34), said panel (5) including:
- a structuring skin (50) fixed against said wall (33) of the nacelle element (31);
- a perforated skin (51) at least partially delimiting the channel (34);
- a core (52) interposed between the structuring skin (50) and the perforated skin (51), said core (52) being produced in an acoustic absorption material of the type having numerous inner cavities;
and in which the or each duct (6) has, on the one hand, a first end (61) crossing the structuring skin (50) in the first area (Z1) of the channel (34) and, on the other hand, a second end (62) crossing the structuring skin in the second area (Z2) of the channel (34), so as to establish the secondary flow in the duct (6) via the core (52) and the perforated skin (51) of the acoustic attenuation panel (5).

2. The nacelle according to claim 1, wherein the duct or ducts (6) define(s), on the one hand, in the first area (Z1) of the channel (34) an inlet surface of the secondary flow and, on the other hand, in the second area (Z2) of the channel (34) an outlet surface of the secondary flow, where the inlet surface has a surface area higher than that of the outlet surface.

3. The nacelle according to claim 2, wherein the ratio of the surface area of the inlet surface to the surface area of the outlet surface is higher than 2, preferably of the order of 4.

4. The nacelle according to any one of the preceding claims, wherein the core (52) of the acoustic attenuation panel (5) has at least one inner wall (53) disposed between the first end (61) and the second end (62) of the duct or ducts (6) so as to seal the core (52) between the first area (Z1) and the second area (Z2) of the channel (34).

5. The nacelle according to any one of the preceding claims, wherein the acoustic absorption material of the core (52) of the acoustic attenuation panel (5) is of the cellular structure material type, in particular honeycomb, or a porous material.

6. The nacelle according to any one of claims 1 to 5, wherein the or each nacelle element is an inlet structure element (1) of the nacelle, located upstream of the turbojet engine and a fan (S) of the turbojet engine, said inlet structure element (1) having an inner tubular wall (10) delimiting a channel (11) for air intake into the nacelle.

7. The nacelle according to any one of claims 1 to 5, wherein the or each nacelle element is a median structure element (2), located upstream of the turbojet engine and surrounding the fan (S), said median structure element (2) having an inner tubular wall (20) delimiting, with the fan (S), an annular channel (21) for air circulation.

8. The nacelle according to any one of claims 1 to 5, wherein the or each nacelle element is an outer downstream structure element (30), located downstream of the fan (S) and surrounding the turbojet engine, said outer downstream structure element (30) having an inner tubular wall (32) delimiting, with an inner downstream structure element (31), an annular flow channel (34) intended for channeling the flow of cold air circulating outside the turbojet engine.

9. The nacelle according to any one of claims 1 to 5, wherein the or each nacelle element is an inner downstream structure element (31), located downstream of the fan (S) and surrounding the turbojet engine, said inner downstream structure element (31) having an outer annular wall (33) delimiting, with the outer downstream structure element (30), an annular flow channel (34) intended for channeling the flow of cold air circulating outside the turbojet engine.

10. The nacelle according to any one of claims 1 to 5, wherein the or each nacelle element is an ejection nozzle element (4) located downstream of the turbojet engine, said nozzle element (4) including at least one annular wall (40) delimiting a channel (41) for exit of the air out of the nacelle.
